# EUROPEAN PATENT APPLICATION

(11) **EP 1 439 530 A1**
(43) Date of publication of application: **21.07.2004**
(21) Application number: 02800721.9
(22) Date of filing: 01.10.2002
(51) Int. Cl.: G11B 7/007, G11B 7/24, G11B 11/105

(54) **MAGNETO OPTICAL RECORDING MEDIUM**

(30) Priority: 09.10.2001 JP 2001311254
(71) Applicant: Sony Corporation, Tokyo 141-0001 (JP)
(72) Inventor: WADA, Yutaka, c/o SONY CORPORATION, Tokyo 141-0001 (JP); NAKAYAMA, Hiroshi, c/o SONY CORPORATION, Tokyo 141-0001 (JP); TAKEUCHI, Atsushi, c/o SONY CORPORATION, Tokyo 141-0001 (JP); ARIMA, Mitsuo, c/o SONY CORPORATION, Tokyo 141-0001 (JP)
(74) Representative: Müller - Hoffmann & Partner
(86) International application number: PCT/JP2002/010229
(87) International publication number: WO 2003/032301

(57) **Abstract**

A magneto-optical recording medium for MSR reproduction of a high signal quality wherein both faces of a land and a groove are used as recording tracks is disclosed. A magneto-optical recording medium wherein both of a land portion and a groove portion on a substrate are used as recording and reproduction tracks while laser light having passed through an objective lens is illuminated on the recording and reproduction tracks is configured that a ratio Wg/Wl between a track width (Wg) of the groove portion and a track width (Wl) of the land portion is equal to or higher than 0.65 but equal to or lower than 0.85, and, where the wavelength of the laser light is represented by ", the numerical aperture of the objective lens by NA and the refractive index of the substrate by n, the groove distance Gp is equal to or greater than 1.0 × "/NA but equal to or smaller than 1.2 × "/NA and besides the depth D of the groove is equal to or greater than "/11n but equal to or smaller than "/8n.

## Description

### Technical Field

This invention relates to a magneto-optical recording medium, and more particularly to a magneto-optical recording medium wherein both of a land and a groove are used as recording and reproduction tracks.

### Background Art

A rewritable and removable magneto-optical recording medium (hereinafter referred to simply as optical disk) is used widely as a file memory for a personal computer and for storage of music and image data. In order to cope with the needs, various techniques for increasing the recording capacity have been and are being developed. As methods for increasing the recording capacity, methods are available wherein the recording density is raised in a radial direction and a circumferential direction.

As one of methods for raising the recording density in a radial direction, a land-groove recording format is available wherein both of a land (flat portion) and a groove (grooved portion) are used as recording tracks. This method is a method wherein, although only one of a land and a groove is conventionally used as a recording track, both of them are used as recording tracks to raise the recording density.

In the land-groove recording method, an influence of crosstalk between signals recorded on adjacent tracks, that is, crosstalk from a signal recorded on a groove adjacent a land or crosstalk from a signal recorded on a land adjacent a groove appears, and it is necessary to suppress the crosstalk.

Further, generally in the land-groove recording, a difference is observed in characteristic of crosstalk between a land track having a concave face and a groove track having a convex face as viewed from an incoming plane of a reproduction laser beam. Thus, there is a difference between the amount of a signal leaking from the land into the groove and the amount of another signal leaking from the groove into the land, and under present conditions, it is obliged to make complicated design paying attention to them.

Further, since the land and the groove are positioned closely to each other as recording tracks, also a phenomenon of jitters is further complicated.

On the other hand, as a method of raising the recording density in a circumferential direction, a magnetically induced super resolution (MSR) is available. The MSR is a technique wherein a recording signal recorded on a recording layer and smaller than a spot of light is read out making use of a magnetic characteristic and a temperature characteristic of different layers of a magnetic multi-layer film and a temperature distribution of the magnetic films brought about by laser light. According to the technique, a conventional optical system can be utilized as it is to achieve very high densification.

Therefore, from the point of view of high densification of an optical disk, higher densification can be anticipated by combination of the land-groove recording and the MSR. In this instance, however, also the crosstalk characteristics and the phenomenon of jitters described above are further complicated, and this makes it more and more difficult to harmonize various parameters to obtain an optimum signal quality through the combination with the MSR.

The present invention has been made in view of the situation described above, and it is an object of the present invention to provide a magneto-optical recording medium which has a land-groove characteristic with which signal characteristics are optimized to achieve high densification of recording through a combination of the land-groove recording and the MSR.

### Disclosure of Invention

The subject described above is achieved by a magneto-optical recording medium according to the present invention described below.

In particular, according to the present invention, a magneto-optical recording medium wherein both of a land portion and a groove portion on a substrate are used as recording and reproduction tracks and laser light having passed through an objective lens is illuminated on the recording and reproduction tracks to perform reproduction is characterized in that a ratio Wg/Wl between a track width (Wg) of the groove portion and a track width (Wl) of the land portion is equal to or higher than 0.65 but equal to or lower than 0.85, and, where the wavelength of the laser light is represented by ,, , the numerical aperture of the objective lens by NA and the refractive index of the substrate by n, the groove distance Gp is equal to or greater than 1.0 × ,,/NA but equal to or smaller than 1.2 × ,,/NA and besides the depth D of the groove is equal to or greater than ,,/11n but equal to or smaller than ,,/8n.

The magneto-optical recording medium having such a configuration as just described has a good signal quality characteristic because the jitter and power margin characteristics relating to both faces of the land and the groove are balanced well.

Further, according to the present invention, the magneto-optical recording medium described above is characterized in that the reproduction is performed using a magnetically induced super resolution (MSR).

Since the land and groove characteristics which provide a good signal quality characteristic and the MSR are combined, high densification of the recording medium of an optical disk can be further promoted.

Further, according to the present invention, the magneto-optical recording medium described above is characterized in that the inclination angle of a side face of the groove of the substrate is equal to or greater than 25° but equal to or smaller than 40°, that the average profile relative roughnesses (Ra) of the land face and the groove face of the substrate are both equal to or smaller than 0.7 nm and that the difference between the average profile relative roughnesses is equal to or less than 0.1 nm.

The magneto-optical recording medium having such a configuration as just described has a better signal quality characteristic because the jitter and power margin characteristics relating to both faces of the land and the groove are balanced better.

Furthermore, according to the present invention, the magneto-optical recording medium described above is characterized in that the magneto-optical recording medium includes a multi-layer magnetic film layer wherein a first magnetic layer having a perpendicular magnetic anisotropy at a room temperature, a second magnetic layer having an in-plane magnetic anisotropy at a room temperature and a third magnetic layer having a perpendicular magnetic anisotropy at a room temperature are layered successively.

The magneto-optical recording medium having such a configuration as just described is suitable for the MSR and has a good signal quality characteristic.

### Brief Description of Drawings

FIG. 1 is a perspective view, partly cut away, of an example of a magneto-optical recording medium according to the present invention;
FIG. 2 is a schematic sectional view of the example of the magneto-optical recording medium according to the present invention;
FIG. 3 is a schematic partial sectional view of a transparent disk substrate of the magneto-optical recording medium according to the present invention;
FIG. 4 is a view illustrating signal reproduction by the magnetically induced super resolution of a double mask RAD method and wherein (a) is a plan view of a state upon reproduction as viewed from the reproduction light illumination side and (b) is a view schematically showing a magnetized state upon reproduction of different layers which form a recording layer;
FIG. 5 is a graph illustrating a relationship between a power margin characteristic and a ratio Wg/Wl; and
FIG. 6 is a graph illustrating a relationship between a jitter bottom value and the ratio Wg/Wl.

### Best Mode for Carrying Out the Invention

A magneto-optical recording medium (hereinafter referred to simply as optical disk) of the present invention is configured such that both of a groove and a land are provided as recording tracks on a substrate and laser light is illuminated on the substrate from the rear face side to perform recording and reproduction.

In the following, an example of the optical disk of the present invention is described with reference to the drawings. However, the optical disk of the present invention is not limited to an embodiment or a working example. In particular, the optical disk of the present invention can be applied to any optical disk wherein a groove and a land are formed as recording tracks on a substrate.

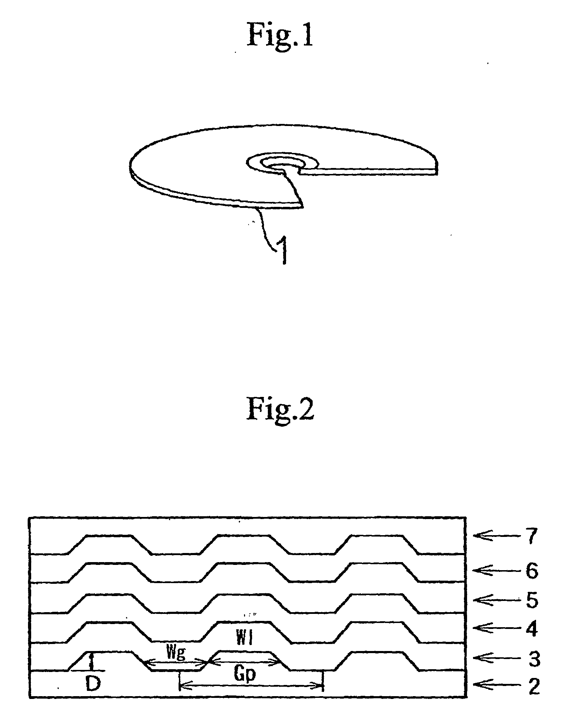

FIG. 1 is a perspective view, partly cut away, of a magneto-optical recording medium 1 (hereinafter referred to simply as optical disk 1) according to the present embodiment. The optical disk 1 of the present invention allows recording and reproduction of a recording signal to be performed by a plurality of times and, for example, is accommodated in a disk cartridge (not shown) and removably loaded into a recording and reproduction apparatus (not shown).

FIG. 2 is a schematic sectional view of an example of the optical information recording medium according to the present invention. A first dielectric layer 3, a magnetic layer 4, a second dielectric layer 5 and a reflection layer 6 were successively layered by an ordinary method of sputtering on a disk substrate 2 having concave and convex groove tracks in the form of lands and grooves formed thereon, and a protective layer 7 was further provided to prepare the optical disk 1.

First, the track widths of a land portion and a groove portion of the disk substrate 2 are set in the following manner. In particular, when laser light is illuminated through an objective lens to use both of the land portion and the groove portion on the substrate as recording and reproduction tracks, the ratio Wg/Wl between the track width (Wg) of the groove portion and the track width (Wl) of the land portion is set to 0.65 or more but 0.85 or less. Where the ratio Wg/Wl is lower than 0.65, the crosstalk from the land portion to the groove portion increase and the reproduction power margin of the groove portion decreases. If the ratio Wg/Wl exceeds 0.85, then the crosstalk from the groove portion to the land portion increases and the reproduction power margin of the land portion decreases. This is hereinafter described.

The depth D and the groove distance Gp of the grooves of the disk substrate 2 are set such that, where the wavelength of the laser light is represented by ,, , the numerical aperture of the objective lens by NA and the refractive index of the substrate by n, the groove distance Gp is set equal to or greater than 1.0 × ,,/NA but equal to or smaller than 1.2 × ,,/NA and the depth D of the groove is set equal to or greater than ,,/11n but equal to or smaller than ,,/8n.

As regards the depth D of the groove, if the value thereof is smaller than ,,/11n, then the crosstalk increases and such a phenomenon that address pits cannot be read and tracking is disabled occurs. On the other hand, if the depth D exceeds ,,/8n, then a difference appears in optical characteristic, that is, sensitivity, and in magnetic field characteristic between the land and the groove. If a difference in optical characteristic appears, then the difference in laser power set value between the land and the groove becomes great, and in this instance, the system configuration becomes more difficult.

Meanwhile, as regards the groove distance Gp, as the value thereof decreases, the crosstalk increases. On the other hand, if the value is set to a high value, then high densification cannot be achieved disadvantageously.

In the present embodiment, it has been perceived that optimization can be achieved by setting the depths of the groove and the groove distance within the individual ranges specified as above.

In the present embodiment, the groove distance Gp of the disk substrate 2 was set to 1.34 µm and the depth D of the groove was set to 45 nm. The wavelength ,, of the laser light used was 635 nm and the numerical aperture NA of the object lens was set to 0.58. Further, polycarbonate was used for the disk substrate 2, and the refractive index n of the disk substrate 2 was set to 1.58.

Further, the magnetic recording medium according to the present embodiment can achieve higher densification by combination with the magnetically induced super resolution (MSR).

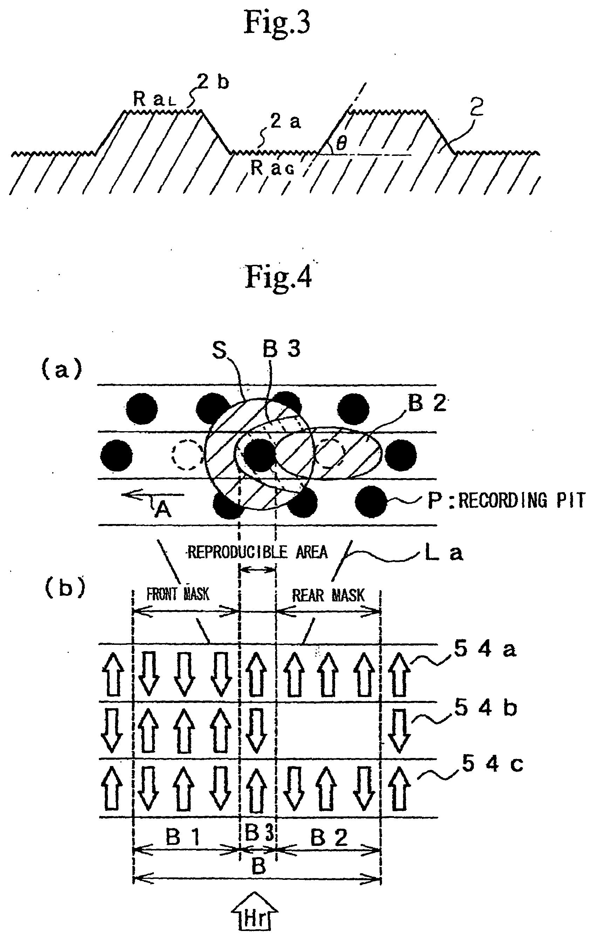

FIG. 3 is a view schematically showing an enlarged cross section of a land-groove configuration in FIG. 2. Referring to FIG. 3, Ra_{L} and Ra_{G} represent an average profile relative roughness of the land and an average profile relative roughness of the groove, respectively, and " represents an angle defined between a side face of the groove and the horizontal plane of the disk substrate 2. Here, in the present embodiment, the groove side inclination angle " is equal to or greater than 25° but equal to or smaller than 40°, and besides the land portion average profile relative roughness Ra_{L} and the groove average profile relative roughness Ra_{G} are both equal to or less than 0.7 nm while the difference between the average profile relative roughnesses may be equal to or less than 0.1 nm. Where the inclination angle and the average profile relative roughnesses are specified in such a manner as described above, the balance between the lands and the grooves is further improved.

The average profile relative roughness Ra_{L} of the land portion, the average profile relative roughness Ra_{G} and the groove side inclination angle " were measured using an AFM (interatomic force microscope).

Further, in the optical disk 1 according to the present embodiment, the magnetic layer 4 is a multi-layer magnetic film wherein a first magnetic layer having a perpendicular magnetic anisotropy at a room temperature, a second magnetic layer having an in-plane magnetic anisotropy at a room temperature and a third magnetic layer having a perpendicularly magnetic anisotropy at a room temperature are layered in order from the substrate side.

Here, the first magnetic layer is a reproduction layer and, in the present embodiment, is made of GdFeCo. The second magnetic layer is an intermediate layer and is made of GdFeCoSi. The third magnetic layer is a recording layer and is made of TbFeCo. The first and second dielectric layers are made of silicon nitride (Si₃N₄). The reflection layer is made of an Al-Ti alloy.

The magnetic layer 4 is formed along the concave-convex configuration of the groove 2a - land 2b of the disk substrate 2.

The thicknesses of the layers are set such that the disk substrate 2 is 1.2 mm thick and the first dielectric layer 3 is 70 to 90 nm thick. The thickness of the magnetic layer 4 formed from three layers as described above is set such that the first magnetic layer is 30 to 50 nm thick, the second magnetic layer 30 to 50 nm thick, and the third magnetic layer 40 to 60 nm thick. Further, the second dielectric layer 5 is 20 to 30 nm thick, and the reflection layer 6 is 10 to 20 nm thick.

Thereafter, a measurement of the power margin and the jitter bottom value upon signal reproduction by the magnetically induced super resolution (MSR) of the double-mask RAD (D-RAD = Double-Rear Aperture Detection) type was conducted for magneto-optical recording media having a configuration similar to that described hereinabove and having various Wg/Wl ratios.

Here, the magnetically induced super resolution of the D-RAD type used in the experiment is a known D-RAD technique as disclosed, for example, in Japanese Patent Laid-Open No. 2000-57646. In the magnetically induced super resolution, upon reproduction of an information signal recorded on a recording layer, a reproduction magnetic field is applied so that the magnetizations of the magnetic layer on the reproduction light illumination side are directed to a fixed direction in part of a region of a reproduction light spot. This allows reproduction of an information signal by the magnetically induced super resolution using a comparatively low reproduction magnetic field. Since the magnetically induced super resolution of the D-RAD type exhibits a particularly high resolution in a circumferential direction among various magnetically induced super resolutions, the recording density of the magneto-optical recording medium can be further raised.

FIG. 4 is a view illustrating signal reproduction by the magnetically induced super resolution of the D-RAD type, and (a) is a plan view of a state upon reproduction from the reproduction light illumination side and (b) is a view schematically showing a magnetization state upon reproduction of layers which compose the recording layer.

As shown in FIG. 4, when an information signal (recording pit: P) is to be reproduced from an optical disk, reproduction light La in the form of a laser beam is illuminated upon the optical disk from the reproduction layer 54a side and a reproduction magnetic field Hr is applied to a region including a reproduction light spot S formed from the reproduction light La while the optical disk is driven to rotate. It is to be noted that an arrow mark A in the figure indicates the traveling direction of the reproduction light spot. Further, another arrow mark Hr in the figure indicates the reproduction magnetic field, and a region denoted by B in the figure indicates a region in which the reproduction magnetic field Hr is applied.

Further, a region denoted by B1 in the figure is a region positioned on the leading side in the traveling direction of the reproduction light spot S in the region in which the reproduction magnetic field Hr is applied, and is a low temperature region in which the temperature is comparatively low. Meanwhile, another region denoted by B2 in the figure is a region positioned on the trailing side in the traveling direction of the reproduction light spot S in the region in which the reproduction magnetic field Hr is applied, and is a high temperature region in which the temperature is comparatively high. Further, a region denoted by B3 in the figure is a region in the proximity of the center of the reproduction light spot S in the region in which the reproduction magnetic field Hr is applied, and is an intermediate temperature region in which the temperature is higher than that in the low temperature region B1 but lower than that in the high temperature region B2.

Here, as described hereinabove, reference character 54a denotes a reproduction layer, 54b an intermediate layer and 54c a recording state retaining layer and correspond to the first magnetic layer, second magnetic layer and third magnetic layer in the present invention, respectively.

It is to be noted that operation of the magnetically induced super resolution is known already, and description thereof is omitted herein.

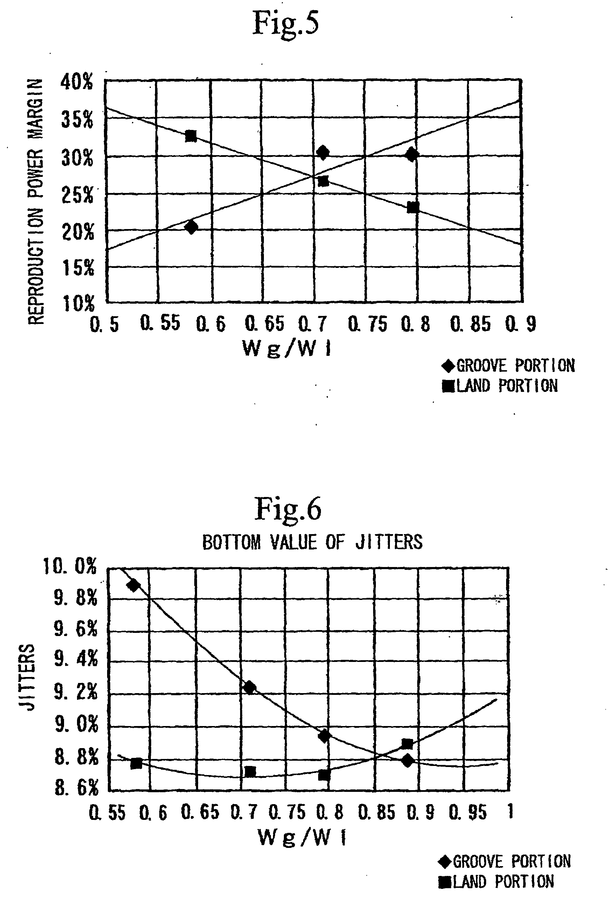

In FIGS. 5 and 6, the reproduction power margin and the bottom value of jitters with respect to the ratio Wg/Wl between the groove width and the land width where a disk (made of polycarbonate) wherein the groove distance Gp (refer to FIG. 2) is 1.34 µm and the depth D of the groove is 45 nm is used.

The ratio Wg/Wl was determined estimating that the width Wg of the groove portion is a half-value width of the height of a hill-like portion using an AFM (interatomic force microscope).

The reproduction power margin shown in FIG. 5 was measured in a state wherein a signal was recorded on a track to be measured while a recording power higher by 5% than that applied to the track to be measured was applied to the tracks on the opposite sides of the track to be measured, that is, in a state wherein crosstalk signals are involved.

The bottom value of jitters of FIG. 6 was measured in a state wherein the opposite side tracks were erased.

The reproduction power margin and the jitters described above were measured with a linear velocity of 7.6 m per second using an evaluation machine wherein the wavelength of the laser light was 635 nm and the NA of the objective leans was 0.58, and a margin of the reproduction power with respect to the central value when it was sliced with jitters of 11% was determined as the reproduction power margin.

In FIG. 5, as the groove width Wg increases, that is, as the ratio Wg/Wl increases, the crosstalk at the groove portion from the land portion decreases, and consequently, the reproduction power margin of the groove portion increases (line of ◆ in FIG. 5). At this time, since the groove distance Gp is fixed, the width of the land portion decreases and the crosstalk from the groove portion increases, and therefore, the reproduction power margin of the land portion decreases (a line of ■ in FIG. 5) .

On the other hand, in a region wherein the ratio Wg/Wl is low, since the land width is great, the reproduction power margin of the land portion increases (the line of ■ in FIG. 5).

In FIG. 6, as the ratio Wg/Wl decreases, the crosstalk at the groove portion from the land portion increases. Thus, the jitters which exhibit a level of 8% where the ratio Wg/Wl is around 0.9 exhibit a sudden increase up to 10% where the ratio Wg/Wl is 0.55 (a line of ◆ in FIG. 6).

Meanwhile, with regard to the land portion, as the Wg/Wl ratio increases exceeding 0.9, a rise in jitters by an influence of the crosstalk from the groove portion to the land portion is observed (a line of ■ in FIG. 6).

Studying the Wg/Wl ratio and the signal characteristic from FIGS. 5 and 6 described above, since the signal qualities of the land and groove portions have a mutually tradeoff relationship, it is essentially required for an optical disk which accepts land and groove recording to satisfy both of the characteristics of the reproduction power margin and the jitters of both of the land and the groove simultaneously in a well-balanced condition. Therefore, it can be recognized that it is optimum to utilize the region of the Wg/Wl ratio equal to or higher than 0.65 but equal to or lower than 0.85 within which the influence of crosstalk of both of the land portion and the groove portion are suppressed appropriately so that a sufficient reproduction power margin can be assured and besides a sudden increase of jitters is not found.

From the experiment described above, where the transparent disk substrate 2 is produced with such characteristics and configuration as described above, it is possible to improve the balance between the jitter characteristic between the land and groove in the magneto-optical signal characteristic of the optical disk and maintain the crosstalk characteristics of the land portion and the groove portion well without deteriorating them. Further, it is possible to favorably and simultaneously satisfy the signal qualities appearing in the crosstalk and jitter characteristics of both of the land and the groove, which has heretofore been difficult, and this is optimum for reproduction of a high density recording medium which uses the MSR.

As described in detail above, the magneto-optical recording medium according to the present invention can exhibit the following effects.

According to the present invention, since the ratio Wg/Wl between the track width (Wg) of the groove portion and the track width (Wl) of the land portion, the groove distance and the depth of the groove are used as parameters to determine the configurations of the land and the groove, it is possible to provide a magneto-optical recording medium which allows recording on both of the land and the groove thereof and exhibits a good signal quality at both of the land and the groove. Further, the optical characteristics of the land and the groove can be made equivalent to each other, and good characteristics can be obtained in regard to both of the jitter characteristic and the crosstalk characteristic of both of the land and the groove. Furthermore, high densification using an optical system same as that for a conventional magneto-optical disk can be achieved.

According to the present invention, where the magnetically induced super resolution (MSR) is used additionally, a magneto-optical recording medium of a further high density having a good signal quality can be provided.

Further, where the relative roughness and the inclination angle of the opposite faces of the land and the groove are set according to the present invention, a magneto-optical recording medium having a better signal quality can be provided.

Further, according to the present invention, a magneto-optical recording medium having a good signal quality and suitable for the MSR can be provided.

## Claims

1. A magneto-optical recording medium wherein both of a land portion and a groove portion on a substrate are used as recording and reproduction tracks and laser light having passed through an objective lens is illuminated on the recording and reproduction tracks to perform reproduction, **characterized in that**
a ratio Wg/Wl between a track width (Wg) of the groove portion and a track width (Wl) of the land portion is equal to or higher than 0.65 but equal to or lower than 0.85, and,
where the wavelength of the laser light is represented by ", the numerical aperture of the objective lens by NA and the refractive index of the substrate by n, the groove distance Gp is equal to or greater than 1.0 × "/NA but equal to or smaller than 1.2 × "/NA and besides the depth D of the groove is equal to or greater than "/11n but equal to or smaller than "/8n.

2. A magneto-optical recording medium according to claim 1, **characterized in that** the reproduction is performed using a magnetically induced super resolution.

3. A magneto-optical recording medium according to claim 1, **characterized in that** the inclination angle of a side face of the groove of the substrate is equal to or greater than 25° but equal to or smaller than 40°, that the average profile relative roughnesses (Ra) of the land face and the groove face of the substrate are both equal to or smaller than 0.7 nm and that the difference between the average profile relative roughnesses is equal to or less than 0.1 nm.

4. A magneto-optical recording medium according to claim 1, **characterized in that** said magneto-optical recording medium includes a multi-layer magnetic film layer wherein a first magnetic layer having a perpendicular magnetic anisotropy at a room temperature, a second magnetic layer having an in-plane magnetic anisotropy at a room temperature and a third magnetic layer having a perpendicular magnetic anisotropy at a room temperature are layered successively.

5. A magneto-optical recording medium according to claim 4, **characterized in that** the first magnetic layer of said magneto-optical recording medium is a reproduction layer and made of a GdFeCo alloy and has a film thickness of 30 to 50 nm, that the second magnetic layer is an intermediate layer and made of GdFeCoSi and has a film thickness of 30 to 50 nm, and that the third magnetic layer is a recording layer and made of TbFeCo and has a film thickness of 40 to 60 nm.

6. A magneto-optical recording medium according to claim 1, **characterized in that** a first dielectric layer and a second dielectric layer of said magneto-optical recording medium are made of silicon nitride, that the first dielectric layer has a film thickness of 70 to 90 nm and the second dielectric layer has a film thickness of 20 to 30 nm, and that a reflection layer is made of an Al-Ti alloy and has a film thickness of 10 to 20 nm.
